# EUROPEAN PATENT APPLICATION

(11) **EP 4 654 526 A1**
(43) Date of publication of application: **26.11.2025**
(21) Application number: 23924937.8
(22) Date of filing: 08.10.2023
(51) Int. Cl.: H04L 9/40, G06F 9/00

(54) **ACCESS CONTROL METHOD AND APPARATUS**

(30) Priority: 27.02.2023 CN 202310209421
(71) Applicant: Huawei Technologies Co., Ltd., Shenzhen, Guangdong 518129 (CN)
(72) Inventor: ZHENG, Ziyong, Shenzhen, Guangdong 518129 (CN); CHENG, Chuanning, Shenzhen, Guangdong 518129 (CN)
(74) Representative: Huawei European IPR
(86) International application number: PCT/CN2023/123447
(87) International publication number: WO 2024/178983

(57) **Abstract**

Embodiments of this application relate to an access control method and apparatus, and relate to the field of computer technologies. The method is applied to a first node including a first storage space, and the first storage space includes a plurality of storage subspaces. The method includes: The first node receives an access request from a second node. The access request is used to access a first storage subspace in the first storage space, the first storage subspace is one of the plurality of storage subspaces, the access request includes space access information and a first access type, and the space access information indicates the first storage space and the first storage subspace. The first node controls access of the second node to the first storage subspace based on the space access information and the first access type. Because a granularity of the first storage subspace is smaller than a granularity of the first storage space, access of the second node to the storage space at a smaller granularity can be controlled based on the method. Therefore, access control can be more flexible.

## Description

This application claims priority to Chinese Patent Application No. 202310209421.4, filed with the China National Intellectual Property Administration on February 27, 2023 and entitled "ACCESS CONTROL METHOD AND APPARATUS", which is incorporated herein by reference in its entirety.

### TECHNICAL FIELD

Embodiments of this application relate to the field of computer technologies, and in particular, to an access control method and apparatus.

### BACKGROUND

In a distributed computing scenario, a large amount of data usually needs to be shared between different nodes. For example, a second node accesses a storage space of a first node. The first node registers the storage space that the second node wants to access, and sends verification information corresponding to the storage space to the second node. The first node controls, based on the verification information, access of the second node to the storage space. However, access control is not flexible enough in the conventional technology.

### SUMMARY

Embodiments of this application provide an access control method and apparatus, to resolve inflexible access control in the conventional technology.

To achieve the foregoing objective, the following technical solutions are used in embodiments of this application.

According to a first aspect, an access control method is provided, and is applied to a first node including a first storage space, and the first storage space includes a plurality of storage subspaces. The method includes: The first node receives an access request from a second node. The access request is used to access a first storage subspace in the first storage space, the first storage subspace is one of the plurality of storage subspaces, the access request includes space access information and a first access type, and the space access information indicates the first storage space and the first storage subspace. The first node controls access of the second node to the first storage subspace based on the space access information and the first access type.

In the foregoing technical solutions, the first storage space includes the plurality of storage subspaces, and the first node controls access of the second node to the first storage subspace based on the access request of the second node. On one hand, because a granularity of the first storage subspace is smaller than a granularity of the first storage space, access of the second node to the storage space at a smaller granularity can be controlled based on the method. On the other hand, the first node may adjust, in a user mode, access types corresponding to the plurality of storage subspaces, and the operation is simpler. Therefore, access control can be more flexible.

In a possible implementation of the first aspect, each of the plurality of storage subspaces corresponds to one or more access types, and that the first node controls access of the second node to the target storage subspace based on the space access information and the first access type includes: When the first storage space and the first storage subspace that are indicated by the space access information are valid, and the first access type belongs to one or more access types corresponding to the first storage subspace, the first node allows access of the second node to the first storage subspace. When the first storage space and the first storage subspace that are indicated by the space access information are invalid, or the first access type does not belong to the one or more access types corresponding to the first storage subspace, the first node rejects access of the second node to the first storage subspace. In the foregoing possible implementation, when the space access information is valid and the first access type belongs to the access type corresponding to the first storage subspace, the first node allows access of the second node to the first storage subspace; otherwise, the first node rejects access of the second node to the first storage subspace. In this way, a basis is provided for the first node to control access of the second node to the first storage subspace, so that access control can be more flexible.

In a possible implementation of the first aspect, before the first node receives the access request from the second node, the method further includes: The first node receives a registration request from the second node. The registration request is used to request to register a storage subspace in the first node, the registration request includes a second access type, and the second access type includes the first access type. The first node sends a registration response to the second node. The registration response indicates the first storage space and the first storage subspace. In the foregoing possible implementation, the second node may register the first storage subspace in the first node, to provide a basis for the first node to control access of the second node to the first storage subspace. Therefore, access control can be more flexible.

In a possible implementation of the first aspect, each of the plurality of storage subspaces corresponds to one access credential, the access request further includes a first access credential, and the method further includes: When the first access credential matches an access credential corresponding to the first storage subspace, the first node allows access of the second node to the first storage subspace. When the first access credential does not match the access credential corresponding to the first storage subspace, the first node rejects access of the second node to the first storage subspace. In the foregoing possible implementation, the first node may further control access of the second node to the first storage subspace based on the first access credential, to provide a basis for the first node to control access of the second node to the first storage subspace. Therefore, access control can be more flexible.

In a possible implementation of the first aspect, before the first node receives the access request from the second node, the method further includes: The first node generates the first access credential for the first storage subspace based on at least one of the following: the first storage space, an access type corresponding to the first storage space, the first storage subspace, the access type corresponding to the first storage subspace, and a random number, and sends the first access credential to the second node. The first access credential is a message authentication code or a key. In the foregoing possible implementation, the first node generates the first access credential based on at least one of the first storage space, the access type corresponding to the first storage space, the first storage subspace, the access type corresponding to the first storage subspace, and the random number. The first access credential may be a message authentication code or a key. This provides a basis for the first node to control access of the second node to the first storage subspace, so that access control can be more flexible.

In a possible implementation of the first aspect, a plurality of second nodes register the first storage subspace, and the method further includes: When access permission of at least one of the plurality of second nodes to the first storage subspace is terminated, the first node updates the first access credential to a second access credential. The first node sends the second access credential to a second node in the plurality of second nodes other than the at least one second node. In the foregoing possible implementation, when terminating the access permission of the at least one second node, the first node updates the access credential, and sends the updated access credential to the second node maintaining access permission. Therefore, in a scenario in which a plurality of users simultaneously access the first storage subspace, when access permission of a part of users is terminated, continuous access to the first storage subspace by other users can be ensured. Therefore, access control can be more flexible.

In a possible implementation of the first aspect, at least two of the plurality of storage subspaces in the first storage space correspond to different access types. In the foregoing possible implementation, at least two storage subspaces correspond to different access types, so that different access types can be set for different storage subspaces at small granularities. Therefore, access control can be more flexible.

According to a second aspect, an access control method is provided. The method includes: A second node sends an access request to a first node. The access request is used to access a first storage subspace in a first storage space, the first storage space is a storage space in the first node, the first storage space includes a plurality of storage subspaces, the first storage subspace is one of the plurality of storage subspaces, the access request includes space access information and a first access type, and the space access information indicates the first storage space and the first storage subspace. The second node accesses the first storage subspace when the first node allows access to the first storage subspace.

In the foregoing technical solutions, on one hand, because a granularity of the first storage subspace is smaller than a granularity of the first storage space, access of the second node to the storage space at a smaller granularity can be controlled based on the method. On the other hand, the first node may adjust, in a user mode, access types corresponding to the plurality of storage subspaces, and the operation is simpler. Therefore, access control can be more flexible.

In a possible implementation of the second aspect, each of the plurality of storage subspaces corresponds to one or more access types, and that the second node accesses the first storage subspace when the first node allows access to the first storage subspace includes: When the first storage space and the first storage subspace that are indicated by the space access information are valid, and the first access type belongs to one or more access types corresponding to the first storage subspace, the second node accesses the first storage subspace. In the foregoing possible implementation, when the space access information is valid and the first access type belongs to the access type corresponding to the first storage subspace, the second node accesses the first storage subspace. In this way, a basis is provided for the first node to control access of the second node to the first storage subspace, so that access control can be more flexible.

In a possible implementation of the second aspect, before the second node sends the access request to the first node, the method further includes: The second node sends a registration request to the first node. The registration request is used to request to register a storage subspace in the first node, the registration request includes a second access type, and the second access type includes the first access type. The second node receives a registration response from the first node. The registration response indicates the first storage space and the first storage subspace. In the foregoing possible implementation, the second node may register the first storage subspace in the first node, to provide a basis for the first node to control access of the second node to the first storage subspace. Therefore, access control can be more flexible.

In a possible implementation of the second aspect, each of the plurality of storage subspaces corresponds to one access credential, the access request further includes a first access credential, and the method further includes: When the first access credential is consistent with an access credential corresponding to the first storage subspace, the second node accesses the first storage subspace. In the foregoing possible implementation, the first node may further control access of the second node to the first storage subspace based on the first access credential, to provide a basis for the first node to control access of the second node to the first storage subspace. Therefore, access control can be more flexible.

In a possible implementation of the second aspect, the method further includes: The second node receives the first access credential from the first node. The first access credential is obtained based on at least one of the following: the first storage space, the first storage subspace, an access type corresponding to the first storage subspace, and a random number. The first access credential is a message authentication code or a key. In the foregoing possible implementation, the first access credential is generated based on at least one of the first storage space, the access type corresponding to the first storage space, the first storage subspace, the access type corresponding to the first storage subspace, and the random number. The first access credential may be a message authentication code or a key. This provides a basis for the first node to control access of the second node to the first storage subspace, so that access control can be more flexible.

In a possible implementation of the second aspect, the method further includes: The second node receives a second access credential from the first node. The second node updates the first access credential to the second access credential. In the foregoing possible implementation, when terminating access permission of at least one second node, the first node updates the access credential, and sends the updated access credential to a second node maintaining access permission. Therefore, in a scenario in which a plurality of users simultaneously access the first storage subspace, when access permission of a part of users is terminated, continuous access to the first storage subspace by other users can be ensured. Therefore, access control can be more flexible.

In a possible implementation of the second aspect, at least two of the plurality of storage subspaces in the first storage space correspond to different access types. In the foregoing possible implementation, at least two storage subspaces correspond to different access types, so that different access types can be set for different storage subspaces at small granularities. Therefore, access control can be more flexible.

According to a third aspect, an access control apparatus is provided, and a first storage space in the apparatus includes a plurality of storage subspaces. The apparatus includes: a receiving unit, configured to receive an access request from a second node, where the access request is used to access a first storage subspace in the first storage space, the first storage subspace is one of the plurality of storage subspaces, the access request includes space access information and a first access type, and the space access information indicates the first storage space and the first storage subspace; and a processing unit, configured to control access of the second node to the first storage subspace based on the space access information and the first access type.

In a possible implementation of the third aspect, each of the plurality of storage subspaces corresponds to one or more access types, and the processing unit is specifically configured to: when the first storage space and the first storage subspace that are indicated by the space access information are valid, and the first access type belongs to one or more access types corresponding to the first storage subspace, allow access of the second node to the first storage subspace; and when the first storage space and the first storage subspace that are indicated by the space access information are invalid, or the first access type does not belong to the one or more access types corresponding to the first storage subspace, reject access of the second node to the first storage subspace.

In a possible implementation of the third aspect, the apparatus further includes a sending unit. The receiving unit is further configured to receive a registration request from the second node. The registration request is used to request to register a storage subspace in the first node, the registration request includes a second access type, and the second access type includes the first access type. The sending unit is configured to send a registration response to the second node. The registration response indicates the first storage space and the first storage subspace.

In a possible implementation of the third aspect, each of the plurality of storage subspaces corresponds to one access credential, the access request further includes a first access credential, and the processing unit is further specifically configured to: when the first access credential matches an access credential corresponding to the first storage subspace, allow access of the second node to the first storage subspace; and when the first access credential does not match the access credential corresponding to the first storage subspace, reject access of the second node to the first storage subspace.

In a possible implementation of the third aspect, the processing unit is further configured to generate the first access credential for the first storage subspace based on at least one of the following: the first storage space, an access type corresponding to the first storage space, the first storage subspace, the access type corresponding to the first storage subspace, and a random number. The sending unit is further configured to send the first access credential to the second node. The first access credential is a message authentication code or a key.

In a possible implementation of the third aspect, a plurality of second nodes register the first storage subspace. The processing unit is further configured to: when access permission of at least one of the plurality of second nodes to the first storage subspace is terminated, update the first access credential to a second access credential. The sending unit is further configured to send the second access credential to a second node in the plurality of second nodes other than the at least one second node.

In a possible implementation of the third aspect, at least two of the plurality of storage subspaces in the first storage space correspond to different access types.

According to a fourth aspect, an access control apparatus is provided. The apparatus includes: a sending unit, configured to send an access request to a first node, where the access request is used to access a first storage subspace in a first storage space, the first storage space is a storage space in the first node, the first storage space includes a plurality of storage subspaces, the first storage subspace is one of the plurality of storage subspaces, the access request includes space access information and a first access type, and the space access information indicates the first storage space and the first storage subspace; and a processing unit, configured to access the first storage subspace when the first node allows access to the first storage subspace.

In a possible implementation of the fourth aspect, each of the plurality of storage subspaces corresponds to one or more access types, and the processing unit is specifically configured to: when the first storage space and the first storage subspace that are indicated by the space access information are valid, and the first access type belongs to one or more access types corresponding to the first storage subspace, access the first storage subspace.

In a possible implementation of the fourth aspect, the apparatus further includes a receiving unit. The sending unit is further configured to send a registration request to the first node. The registration request is used to request to register a storage subspace in the first node, the registration request includes a second access type, and the second access type includes the first access type. The receiving unit is configured to receive a registration response from the first node. The registration response indicates the first storage space and the first storage subspace.

In a possible implementation of the fourth aspect, each of the plurality of storage subspaces corresponds to one access credential, the access request further includes a first access credential, and the processing unit is further specifically configured to: when the first access credential is consistent with an access credential corresponding to the first storage subspace, access the first storage subspace.

In a possible implementation of the fourth aspect, the receiving unit is further configured to receive the first access credential from the first node. The first access credential is obtained based on at least one of the following: the first storage space, the first storage subspace, an access type corresponding to the first storage subspace, and a random number. The first access credential is a message authentication code or a key.

In a possible implementation of the fourth aspect, the receiving unit is further configured to receive a second access credential from the first node. The processing unit is further configured to update the first access credential to the second access credential.

In a possible implementation of the fourth aspect, at least two of the plurality of storage subspaces in the first storage space correspond to different access types.

According to a fifth aspect, an access control apparatus is provided. The apparatus includes a processor and a memory, the memory stores instructions, and when the processor runs the instructions, the apparatus is caused to implement the access control method in the first aspect or any one of the possible implementations of the first aspect.

According to a sixth aspect, an access control apparatus is provided. The apparatus includes a processor and a memory, the memory stores instructions, and when the processor runs the instructions, the apparatus is caused to implement the access control method in the second aspect or any one of the possible implementations of the second aspect.

According to a seventh aspect, a computer-readable storage medium is provided. The computer-readable storage medium stores a computer program or instructions, and when the computer program or the instructions is/are run, the access control method in the first aspect or any one of the possible implementations of the first aspect is implemented.

According to an eighth aspect, a computer-readable storage medium is provided. The computer-readable storage medium stores a computer program or instructions, and when the computer program or the instructions is/are run, the access control method in the second aspect or any one of the possible implementations of the second aspect is implemented.

According to another aspect, an embodiment of this application provides an access control system. The control system includes a first node and a second node. The first node is configured to perform the access control method in the first aspect or any one of the possible implementations of the first aspect, and the second node is configured to perform the access control method in the second aspect or any one of the possible implementations of the second aspect.

According to still another aspect, an embodiment of this application provides a computer program product. When the computer program product runs on a computer, the computer is caused to perform the method in the first aspect or any one of the possible implementations of the first aspect and the method in the second aspect or any one of the possible implementations of the second aspect.

It may be understood that the apparatus, the system, the computer storage medium, or the computer program product of any access control method described above is used to perform the corresponding method described above. Therefore, for beneficial effect that can be achieved by the apparatus, the system, the computer storage medium, or the computer program product, refer to beneficial effect in the corresponding method described above. Details are not described herein again.

### BRIEF DESCRIPTION OF DRAWINGS

FIG. 1 is a diagram of a communication network according to an embodiment of this application;
FIG. 2 is a diagram of a requester and a responder according to an embodiment of this application;
FIG. 3 is a schematic flowchart 1 of an access control method according to an embodiment of this application;
FIG. 4 is a diagram of a first storage space according to an embodiment of this application;
FIG. 5 is a diagram 1 of a plurality of storage spaces according to an embodiment of this application;
FIG. 6 is a schematic flowchart 2 of an access control method according to an embodiment of this application;
FIG. 7 is a diagram 2 of a plurality of storage spaces according to an embodiment of this application;
FIG. 8 is a diagram in which a first node sends a second access credential according to an embodiment of this application;
FIG. 9 is a schematic flowchart 3 of an access control method according to an embodiment of this application;
FIG. 10 is a schematic flowchart 4 of an access control method according to an embodiment of this application;
FIG. 11 is a schematic flowchart of another access control method according to an embodiment of this application;
FIG. 12 is a diagram of an access control apparatus according to an embodiment of this application;
FIG. 13 is a diagram of another access control apparatus according to an embodiment of this application;
FIG. 14 is a diagram of still another access control apparatus according to an embodiment of this application; and
FIG. 15 is a diagram of yet another access control apparatus according to an embodiment of this application.

### DESCRIPTION OF EMBODIMENTS

The following describes technical solutions in embodiments of this application with reference to accompanying drawings in embodiments of this application. In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, in the embodiments of this application, terms such as "first" and "second" do not limit a quantity or an execution sequence.

It should be noted that in embodiments of this application, a word like "for example" or "such as" is used to represent an example, an example illustration, or a description. Any embodiment or design scheme described as an "example" or "for example" in embodiments of this application should not be explained as being more preferred or having more advantages than another embodiment or design scheme. To be precise, use of the word like "for example" or "such as" is intended to present a relative concept in a specific manner.

Before embodiments of this application are described, the related technical background in embodiments of this application is described first. In a distributed computing scenario, a large amount of data usually needs to be shared between different nodes. For example, a second node accesses a storage space of a first node. The first node registers the storage space that the second node wants to access, and sends verification information corresponding to the storage space to the second node. The first node controls, based on the verification information, access of the second node to the storage space. A network transmission protocol like the InfiniBand (InfiniBand, IB) technology or remote direct memory access (remote direct memory access, RDMA) is used as an example. A plurality of second nodes apply to the first node for access permission to a memory region, and the first node traps into a kernel mode to register the memory region, and generates a key corresponding to the memory region. The first node stores identification information corresponding to the memory region and the key in a permission table, and sends the key to the plurality of second nodes. To prevent the key from being maliciously spoofed, the key may be a random number with a specific bit width length.

A conventional method has at least the following problems: First, the foregoing memory region is a memory region at a large preset granularity, and a different access type cannot be set for a memory region at a smaller granularity in the memory region. Second, if an access type corresponding to the memory region needs to be adjusted, an operation may be performed in the kernel mode, but the operation is complex. If the access type corresponding to the memory region needs to be adjusted in a user mode, the memory region needs to be bound to a memory window. However, pre-registering the memory window consumes resources, and a quantity of memory windows is limited. Third, different second nodes access the memory region based on the same key. If access permission of one of the second nodes needs to be invalid, the first node needs to trap into the kernel mode to invalidate a page table corresponding to the key. However, access permission of all the second nodes is terminated. Another second node needs to re-apply to the first node for access permission to the memory region, and receive the key, so that the another second node can continue to access the memory region in the first node. Therefore, in the conventional method, access control is not flexible enough.

After the related technical background in embodiments of this application is described, the following describes in detail a scenario to which embodiments of this application are applicable. The technical solutions provided in embodiments of this application may be applied to a communication network. The communication network may include a plurality of network nodes. The plurality of network nodes may communicate with each other over a network (network). The communication may be implemented according to a network transmission protocol. For example, the communication network may include a data center network (data center network, DCN), a high performance computing (high performance computing, HPC) network, or a cloud network. The network node in the communication network may also be referred to as a node for short, and the node may be a computer, a server, or the like.

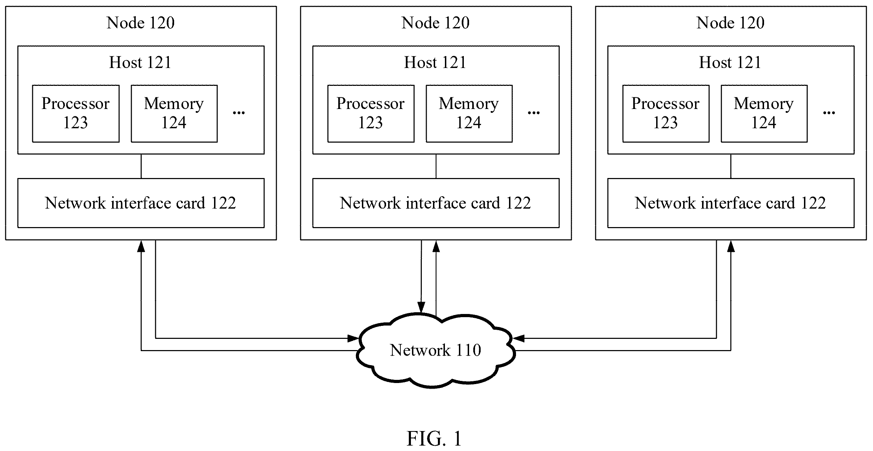

For example, as shown in FIG. 1, the communication network 110 includes a plurality of nodes 120, and the plurality of nodes 120 are connected over the network 110. Data may be shared between different nodes 120 in the plurality of nodes 120. For example, a data packet (packet) may be transmitted between any two nodes 120 in the plurality of nodes 120. Each of the plurality of nodes 120 may include a host (host) 121 and a network interface card (network interface card, NIC), and the network interface card may also be referred to as a network interface card 122. The host 121 may include a processor 123, a memory (memory) 124, a memory management unit (memory management unit, MMU), and the like. For example, the processor 123 may be a central processing unit (central processing unit, CPU), and the memory 124 may be a memory (which may be referred to as a memory). Optionally, the memory may be a dynamic random access memory (dynamic random access memory, DRAM) or a double data rate (double data rate, DDR) memory.

In embodiments of this application, when data is shared between the plurality of nodes 120 included in the communication network 110, each of the plurality of nodes 120 may perform on-demand memory allocation. In a possible embodiment, when a node 120 needs to share data with another node 120, the node 120 may apply, in the on-demand manner, to the another node 120 for a memory that can be used to store the data. After obtaining the memory through application, the node 120 may send a memory access request used to access the memory.

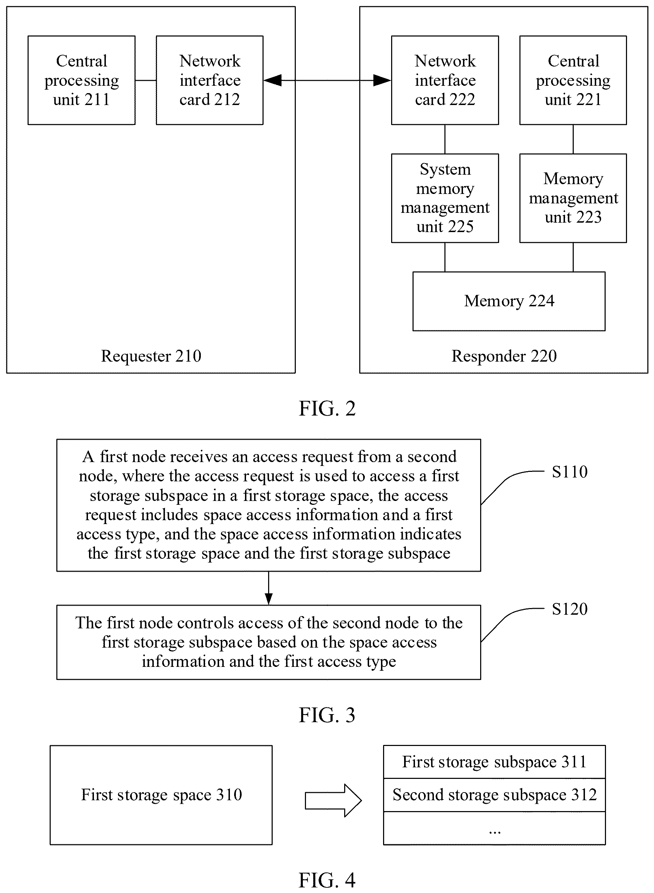

As shown in FIG. 2, when data is shared between two nodes in the communication network, a memory user (namely, a node that initiates a memory access request) may be referred to as a requester (requester) 210, and a memory provider (namely, a node that receives the memory access request) may be referred to as a responder (responder) 220. The responder may be the first node, and the requester may be the second node. For example, the requester 210 may include a central processing unit 211 and a network interface card 212 that are coupled, and the responder 220 may include a central processing unit 221, a memory management unit 223, a memory 224, a system memory management unit (system memory management unit, SMMU) 225, and a network interface card 222 that are sequentially coupled.

It may be understood that structures of the requester 210 and the responder 220 shown in FIG. 2 are merely examples. During actual application, the requester 210 and the responder 220 may further include more or fewer components than those shown in the figure, or a combination of some components, or components disposed differently. FIG. 2 does not constitute a limitation on embodiments of this application.

The following describes specific content of an access control method in embodiments of this application in detail. FIG. 3 is a schematic flowchart 1 of an access control method according to an embodiment of this application. The method may be applied to a first node including a first storage space, the first storage space includes a plurality of storage subspaces, and the method may include the following steps.

S110: The first node receives an access request from a second node, where the access request is used to access a first storage subspace in the first storage space, the first storage subspace is one of the plurality of storage subspaces, the access request includes space access information and a first access type, and the space access information indicates the first storage space and the first storage subspace.

The storage space may be a storage space in a memory. An address of the first storage space and addresses of the plurality of storage subspaces are virtual addresses. The first storage space may be a storage space at a preset granularity. FIG. 4 is a diagram of a first storage space according to an embodiment of this application. A first storage space 310 may include a first storage subspace 311 and a second storage subspace 312, and may further include another storage subspace. Optionally, the first node may trap into a kernel mode and register the first storage space 310, and the first storage subspace 311, the second storage subspace 312, and the another storage subspace may be registered by the first node in a user mode.

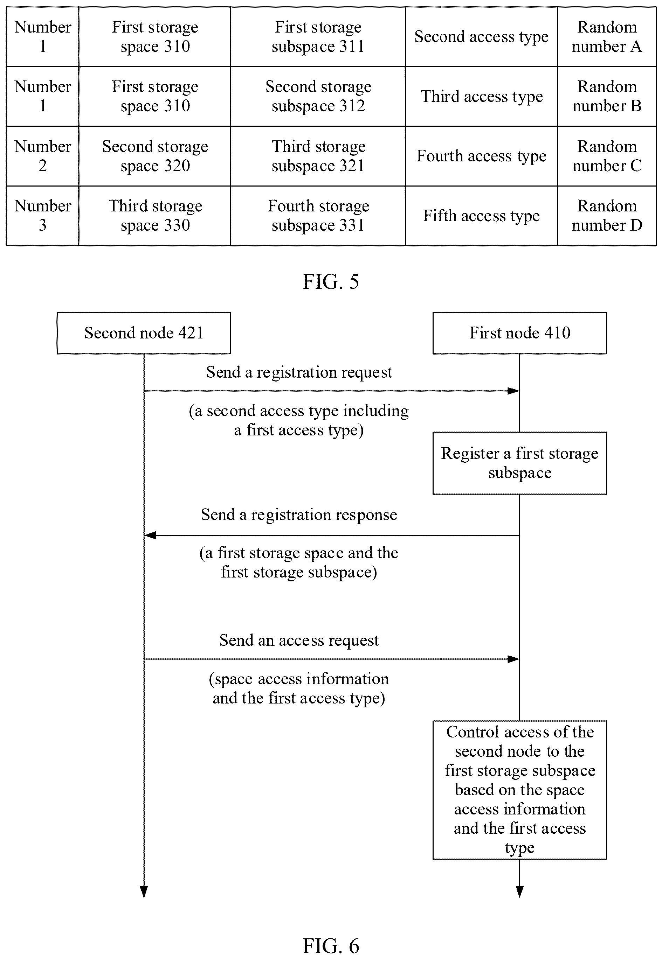

In addition, the first node may include a plurality of storage spaces, and each storage space corresponds to one number. FIG. 5 is a diagram 1 of a plurality of storage spaces according to an embodiment of this application. In FIG. 5, the first storage space 310 corresponds to a number 1, a second storage space 320 corresponds to a number 2, and a third storage space 330 corresponds to a number 3. Each storage space may include at least one storage subspace. For example, the second storage space 320 includes a third storage subspace 321, and the third storage space 330 includes a fourth storage subspace 331. Optionally, the first node may further include a fourth storage space (not shown in FIG. 5), and the fourth storage space does not include a storage subspace.

Optionally, storage subspaces in one storage space do not overlap each other. For example, in FIG. 5, in the first storage space 310, addresses in the first storage subspace 311 are completely different from addresses in the second storage subspace 312.

Optionally, storage subspaces in different storage spaces may overlap. For example, in FIG. 5, addresses in the first storage subspace 311 are partially the same as or completely the same as addresses in the third storage subspace 321.

In addition, the space access information may include the number corresponding to the first storage space and the addresses in the first storage subspace. The first node may determine the first storage space based on the number corresponding to the first storage space, and may determine the first storage subspace based on the first storage space and the addresses in the first storage subspace. Optionally, the addresses in the first storage subspace may be addresses of a part of spaces in the first storage subspace, or may be all the addresses in the first storage subspace.

S120: The first node controls access of the second node to the first storage subspace based on the space access information and the first access type.

Controlling access of the second node to the first storage subspace may be: allowing or rejecting access of the second node to the first storage subspace. For example, the first access type is data writing, and the first node allowing access of the second node to the first storage subspace may be that the first node allows the second node to write corresponding data into the first storage subspace. The first node rejecting access of the second node to the first storage subspace may be that the first node does not allow the second node to write corresponding data into the first storage subspace. The first access type is data reading, and the first node allowing access of the second node to the first storage subspace may be that the first node allows the second node to read data in the first storage subspace. The first node rejecting access of the second node to the first storage subspace may be that the first node does not allow the second node to read data in the first storage subspace.

In the access control method provided in embodiments of this application, the first storage space includes the plurality of storage subspaces, and the first node controls access of the second node to the first storage subspace based on the access request of the second node. On one hand, because a granularity of the first storage subspace is smaller than a granularity of the first storage space, access of the second node to a storage space at a smaller granularity can be controlled based on the method. On the other hand, the first node may adjust, in the user mode, access types corresponding to the plurality of storage subspaces, and the operation is simpler. Therefore, access control can be more flexible.

In a possible embodiment, each of the plurality of storage subspaces corresponds to one or more access types, and S120 includes: When the first storage space and the first storage subspace that are indicated by the space access information are valid, and the first access type belongs to one or more access types corresponding to the first storage subspace, the first node allows access of the second node to the first storage subspace. When the first storage space and the first storage subspace that are indicated by the space access information are invalid, or the first access type does not belong to the one or more access types corresponding to the first storage subspace, the first node rejects access of the second node to the first storage subspace.

The second node may register a storage subspace in the first node in advance. The first storage space and the first storage subspace being valid may be: The first storage space is consistent with a storage space in which the storage subspace registered by the second node is located, and the first storage subspace is consistent with the storage subspace registered by the second node. The first storage space and the first storage subspace that are indicated by the space access information being invalid may be: The first storage space is inconsistent with the storage space in which the storage subspace registered by the second node is located, or the first storage subspace is inconsistent with the storage subspace registered by the second node.

In addition, each storage space may correspond to a plurality of access types. For example, in FIG. 5, access types corresponding to the first storage space 310 may be data reading, data writing, and no access. Each storage subspace may correspond to one or more access types. The access type corresponding to each storage subspace belongs to a plurality of access types of a storage space in which the storage subspace is located. For example, in FIG. 5, a second access type corresponding to the first storage subspace 311 may be data reading and data writing, and a third access type corresponding to the second storage subspace 312 may be data reading.

In addition, the first node may determine, based on the number corresponding to the first storage space, the access type corresponding to the first storage space, and may further determine, based on the first storage space and the addresses in the first storage subspace, the one or more access types corresponding to the first storage subspace.

In the access control method provided in embodiments of this application, when the space access information is valid and the first access type belongs to the access type corresponding to the first storage subspace, the first node allows access of the second node to the first storage subspace; otherwise, the first node rejects access of the second node to the first storage subspace. In this way, a basis is provided for the first node to control access of the second node to the first storage subspace, so that access control can be more flexible.

In a possible embodiment, at least two of the plurality of storage subspaces in the first storage space correspond to different access types. The at least two storage subspaces corresponding to different access types may be that the access types corresponding to the at least two storage subspaces are not completely the same. For example, the second access type is data reading and data writing, the third access type is data reading, both the second access type and the third access type include data reading, but the third access type does not include data writing. In this case, the second access type and the third access type are not completely the same.

In the access control method provided in embodiments of this application, at least two storage subspaces correspond to different access types, so that different access types can be set for different storage subspaces at small granularities. Therefore, access control can be more flexible.

Because at least two of the plurality of storage subspaces in the first storage space correspond to different access types, an access type corresponding to a storage subspace in the first storage space is different from the access types corresponding to the first storage space.

In a possible embodiment, access types corresponding to storage subspaces in different storage spaces may be the same. For example, in FIG. 5, the second access type may be data reading and data writing, and a fourth access type corresponding to the third storage subspace 321 and a fifth access type corresponding to the fourth storage subspace may also be data reading and data writing.

In a possible embodiment, before S110, the method further includes: The first node receives a registration request from the second node. The registration request is used to request to register a storage subspace in the first node, the registration request includes the second access type, and the second access type includes the first access type. The first node sends a registration response to the second node. The registration response indicates the first storage space and the first storage subspace.

FIG. 6 is a schematic flowchart 2 of an access control method according to an embodiment of this application. Interaction between a first node 410 and a second node 421 is used as an example for description. The first node 410 may pre-register the first storage space, and store the number of the first storage space, the address of the first storage space, and the plurality of access types corresponding to the first storage space.

In addition, the second node 421 sends the registration request to the first node 410, and the first node 410 receives the registration request from the second node 421. The registration request may include a target size, and the registration request is used to request to register a storage subspace of the target size. The first node 410 may register, based on the registration request, the first storage subspace in the pre-registered first storage space. A size of the first storage subspace is the target size, and the access type corresponding to the first storage subspace is the second access type. The first node 410 stores the address of the first storage subspace in the first storage space and the second access type.

In addition, the first node 410 sends the registration response to the second node 421. The registration response may include the address of the first storage space and the address of the first storage subspace. The address of the first storage space may indicate the first storage space, and the address of the first storage subspace may indicate the first storage subspace. Optionally, the registration response may further include the number corresponding to the first storage space and the second access type.

Then, the second node 421 may send the access request to the first node 410. The first node 410 receives the access request from the second node 421, and controls, based on the space access information and the first access type in the access request, access of the second node 421 to the first storage subspace.

Optionally, the first node may further register a fifth storage subspace in the first storage space based on a registration request of a third node, and the fifth storage subspace does not overlap another storage subspace in the first storage space.

Optionally, when the third node needs to register a storage subspace that overlaps the first storage subspace, the first node may re-register a fifth storage space, and generate a number corresponding to the fifth storage space. The fifth storage space may overlap the first storage space, and an access type corresponding to the fifth storage space may be the same as the access type corresponding to the first storage space. The first node may register the fifth storage subspace in the fifth storage space, and the fifth storage subspace does not overlap another storage subspace in the fifth storage space.

In the access control method provided in embodiments of this application, the second node may register the first storage subspace in the first node, to provide a basis for the first node to control access of the second node to the first storage subspace. Therefore, access control can be more flexible.

In a possible embodiment, each of the plurality of storage subspaces corresponds to one access credential, the access request further includes a first access credential, and the method further includes: When the first access credential matches an access credential corresponding to the first storage subspace, the first node allows access of the second node to the first storage subspace. When the first access credential does not match the access credential corresponding to the first storage subspace, the first node rejects access of the second node to the first storage subspace.

Optionally, the first node allows access of the second node to the first storage subspace only when the access request meets three conditions. In other words, when the first storage space and the first storage subspace that are indicated by the space access information are valid, the first access type belongs to the one or more access types corresponding to the first storage subspace, and the first access credential matches the access credential corresponding to the first storage subspace, the first node allows access of the second node to the first storage subspace. When the access request does not meet one condition, the first node rejects access of the second node to the first storage subspace. In other words, when the first storage space and the first storage subspace that are indicated by the space access information are invalid, or the first access type does not belong to the one or more access types corresponding to the first storage subspace, or the first access credential does not match the access credential corresponding to the first storage subspace, the first node rejects access of the second node to the first storage subspace.

In the access control method provided in embodiments of this application, the first node may further control access of the second node to the first storage subspace based on the first access credential, to provide a basis for the first node to control access of the second node to the first storage subspace. Therefore, access control can be more flexible.

In a possible embodiment, before S110, the method may further include: The first node generates the first access credential for the first storage subspace based on at least one of the following: the first storage space, the access type corresponding to the first storage space, the first storage subspace, the access type corresponding to the first storage subspace, and a random number, and sends the first access credential to the second node. The first access credential is a message authentication code or a key. Optionally, the first node may further generate the first access credential based on the number corresponding to the first storage space, or based on the number corresponding to the first storage space and at least one of the foregoing information.

Optionally, the step in which the first node generates the first access credential may be performed in a process in which the first node registers the first storage subspace for the second node. For example, the first node generates the first access credential when registering the first storage subspace based on the registration request. When storing the address of the first storage subspace in the first storage space and the second access type, the first node also stores the first access credential. The step in which the first node sends the first access credential to the second node may be performed when the first node sends the registration response to the second node. For example, the registration response sent by the first node to the second node may include the first access credential. Optionally, a password manager in the first node generates the first access credential.

Optionally, each storage subspace in the first node corresponds to one random number. For example, in FIG. 5, the first storage subspace 311 corresponds to a random number A, the second storage subspace 312 corresponds to a random number B, the third storage subspace 321 corresponds to a random number C, and the fourth storage subspace 331 corresponds to a random number D.

In a possible embodiment, the first access credential is a message authentication code. The first access credential is generated based on a root key, a message authentication code computing function, and at least one of the number corresponding to the first storage space, the first storage space, the access type corresponding to the first storage space, the first storage subspace, the access type corresponding to the first storage subspace, and the random number. A derived input of the root key may be a count value of a local counter (local count, local cnt). The message authentication code computing function includes at least one of computing functions such as hash-based message authentication code (hash-based message authentication code, HMAC), cipher-based message authentication code (cipher-based message authentication code, CMAC), and Galois message authentication code (Galois message authentication code, GMAC).

In this embodiment, the first access credential matching the access credential corresponding to the first storage subspace may be that the first access credential is consistent with the access credential corresponding to the first storage subspace. The access credential corresponding to the first storage subspace is generated based on the root key, the message authentication code computing function, and at least one of the number corresponding to the first storage space, the first storage space, the access type corresponding to the first storage space, the first storage subspace, the access type corresponding to the first storage subspace, and the random number. The access credential corresponding to the first storage subspace may be regenerated by the first node after the first node receives the access request, or may be pre-generated and stored by the first node.

In another possible embodiment, the first access credential is a key. The first access credential is generated based on a root key, a key derivation function, and at least one of the number of the first storage space, the first storage space, the access type corresponding to the first storage space, the first storage subspace, the access type corresponding to the first storage subspace, and the random number. The key derivation function includes at least one of computing functions such as password-based key derivation function 2 (password-based key derivation function 2, PBKDF2) and HMAC-based key derivation function (HMAC-based key derivation function, HKDF).

In this embodiment, comparison information generated based on the first access credential may be represented by an integrity check value (integrity check value, ICV). The first access credential matching the access credential corresponding to the first storage subspace may be that comparison information ICV1 generated based on the first access credential is consistent with comparison information ICV2 generated based on the access credential corresponding to the first storage subspace. The ICV1 is generated based on the first access credential, the message authentication code computing function, and at least one of the number corresponding to the first storage space, the address, of the first storage subspace, in the space access information, the first access type, a parameter tag (tag) (for example, time and a packet sequence number of the access request packet) that varies with the access request packet, and another field of the access request packet.

The ICV2 is generated based on the access credential corresponding to the first storage subspace, the message authentication code computing function, and at least one of the number corresponding to the first storage space, the address, of the first storage subspace, in the space access information, the first access type, a parameter tag (tag) (for example, time and a packet sequence number of the access request packet) that varies with the access request packet, and another field of the access request packet. The ICV2 may be regenerated by the first node after the first node receives the access request, or may be pre-generated and stored by the first node.

In the access control method provided in embodiments of this application, the first node generates the first access credential based on at least one of the first storage space, the access type corresponding to the first storage space, the first storage subspace, the access type corresponding to the first storage subspace, and the random number. The first access credential may be a message authentication code or a key. This provides a basis for the first node to control access of the second node to the first storage subspace, so that access control can be more flexible.

In a possible embodiment, a plurality of second nodes register the first storage subspace, and the method further includes: When access permission of at least one of the plurality of second nodes to the first storage subspace is terminated, the first node updates the first access credential to a second access credential. The first node sends the second access credential to a second node in the plurality of second nodes other than the at least one second node.

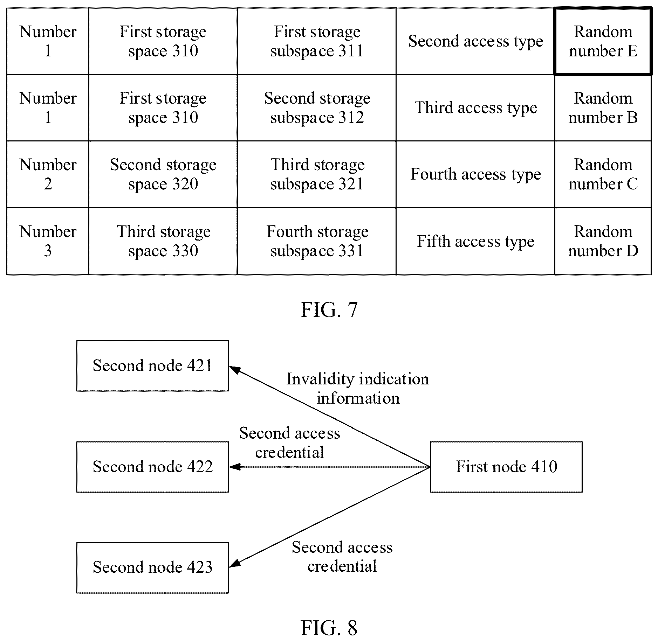

The first node updating the first access credential to the second access credential may be that the first access credential is generated based on the random number. Each storage subspace may further correspond to one backup random number. The first node updates the currently used random number to the backup random number, to update the first access credential to the second access credential. For example, the random number A in FIG. 5 is updated to a random number E in FIG. 7, and the random number E is a backup random number. Then, the second access credential is calculated based on the random number E. Optionally, the first node may further update the backup random number from the random number E to a random number F.

In addition, the access permission of at least one of the plurality of second nodes to the first storage subspace being terminated may be that the at least one second node applies for access permission, of target duration, to the first storage subspace, and the access permission of the at least one second node to the first storage subspace is terminated after the target duration ends. Alternatively, when a system of the at least one second node is attacked, permission termination information is sent to the first node, and the first node terminates the access permission of the at least one second node to the first storage subspace based on the permission termination information.

FIG. 8 is a diagram in which a first node sends a second access credential according to an embodiment of this application. A second node 421, a second node 422, and a second node 423 register the first storage subspace. The first node 410 sending the second access credential to the second node in the plurality of second nodes other than the at least one second node may be that the first node 410 needs to terminate access permission of the second node 421 to the first storage subspace, and maintain access permission of the second node 422 and the second node 423. The first node 410 sends the updated second access credential to the second node 422 and the second node 423.

Optionally, the first node 410 further sends update indication information to the second node 422 and the second node 423. The update indication information indicates the second node 422 and the second node 423 to update the first access credential to the second access credential.

Optionally, the second node 422 and the second node 423 update the first access credential to the second access credential, and send update responses to the first node 410. When the first node 410 receives the update responses from the second node 422 and the second node 423, or waiting of the first node 410 times out, the first node 410 updates, to the second access credential, the access credential corresponding to the first storage subspace.

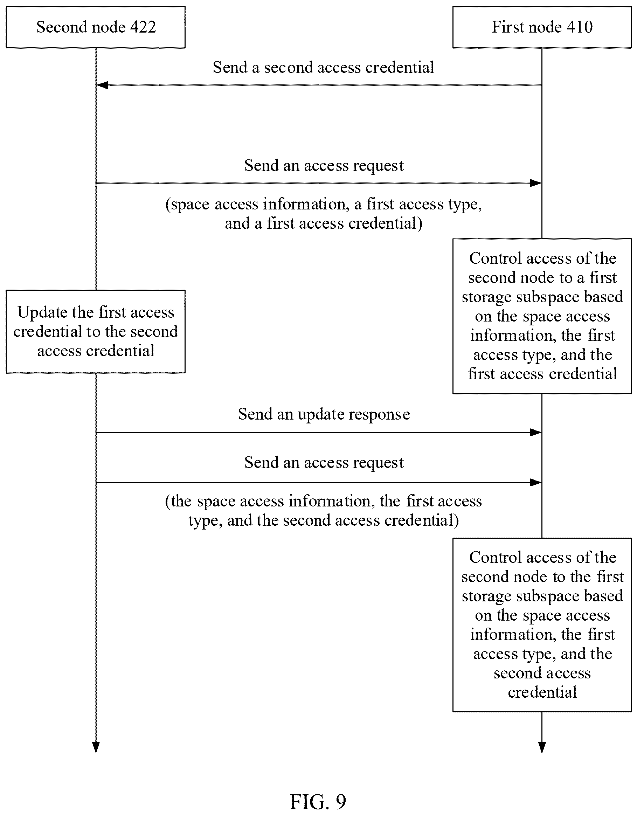

The following describes an access procedure of a second node whose access permission to the first storage subspace is not terminated. FIG. 9 is a schematic flowchart 3 of an access control method according to an embodiment of this application When waiting of the first node 410 does not time out, and before the first node 410 receives the update responses from the second node 422 and the second node 423, the second node 422 may send an access request to the first node 410. The access request includes the space access information, the first access type, and the first access credential. The first node 410 controls access of the second node 422 to the first storage subspace based on the space access information, the first access type, and the first access credential.

When waiting of the first node 410 times out, or after the first node 410 receives the update responses from the second node 422 and the second node 423, the second node 422 sends an access request to the first node 410. The access request includes the space access information, the first access type, and the second access credential. The first node 410 controls access of the second node 422 to the first storage subspace based on the space access information, the first access type, and the second access credential.

Specifically, when the first storage space and the first storage subspace that are indicated by the space access information are valid, the first access type belongs to the one or more access types corresponding to the first storage subspace, and the second access credential matches the access credential corresponding to the first storage subspace, the first node 410 allows access of the second node 422 to the first storage subspace.

The second access credential matching the access credential corresponding to the first storage subspace may be that the second access credential is a message authentication code, and is consistent with the access credential corresponding to the first storage subspace. The access credential corresponding to the first storage subspace is generated based on the updated random number E.

In addition, the second access credential matching the access credential corresponding to the first storage subspace may alternatively be that the second access credential is a key. Comparison information ICV1 generated based on the second access credential is consistent with the comparison information ICV2 generated based on the access credential corresponding to the first storage subspace. The access credential corresponding to the first storage subspace is generated based on the random number E.

Optionally, as shown in FIG. 8, the first node 410 further sends invalidity indication information to the second node 421, and the invalidity indication information indicates to the second node 421 that the first access credential is invalid. The second node 421 deletes the first access credential based on the invalidity indication information, and sends an invalidity response to the first node 410. When the first node 410 receives the invalidity response from the second node 421, and the update responses from the second node 422 and the second node 423, or waiting of the first node 410 times out, the first node 410 updates, to the second access credential, the access credential corresponding to the first storage subspace.

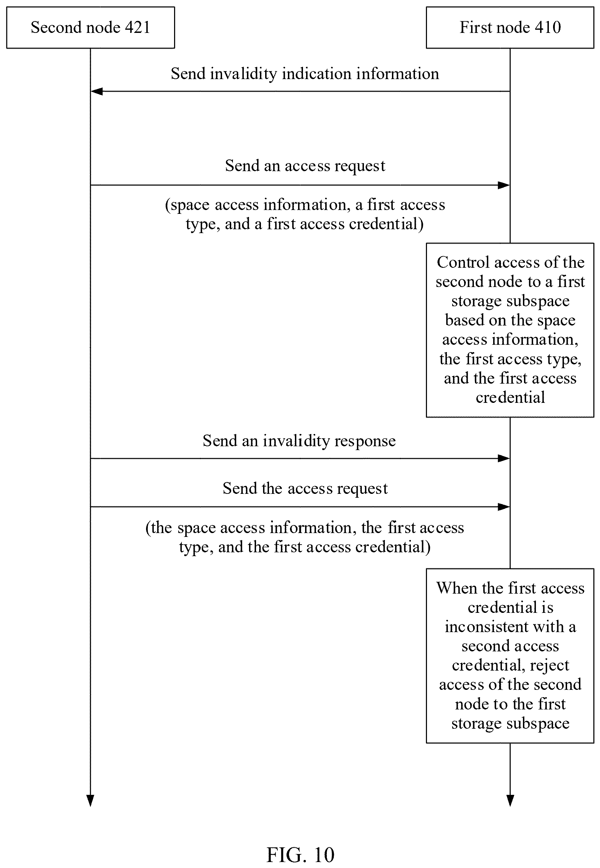

The following describes an access procedure of a second node whose access permission to the first storage subspace is terminated. FIG. 10 is a schematic flowchart 4 of an access control method according to an embodiment of this application. Before waiting of the first node 410 does not time out, and the first node 410 receives the invalidity response from the second node 421, and the update responses from the second node 422 and the second node 423, the second node 421 may still send an access request to the first node. The access request includes the space access information, the first access type, and the first access credential. The first node 410 controls access of the second node 421 to the first storage subspace based on the space access information, the first access type, and the first access credential.

Optionally, the second node 421 does not delete the first access credential. After the first node 410 updates the first access credential to the second access credential, the second node 421 sends the access request to the first node 410. The access request includes the space access information, the first access type, and the first access credential. Because the first access credential does not match the second access credential in the first node 410, the first node 410 rejects access of the second node 421 to the first storage subspace.

In the access control method provided in embodiments of this application, when terminating the access permission of the at least one second node, the first node updates the access credential, and sends the updated access credential to the second node maintaining access permission. Therefore, in a scenario in which a plurality of users simultaneously access the first storage subspace, when access permission of a part of users is terminated, continuous access to the first storage subspace by other users can be ensured. Therefore, access control can be more flexible.

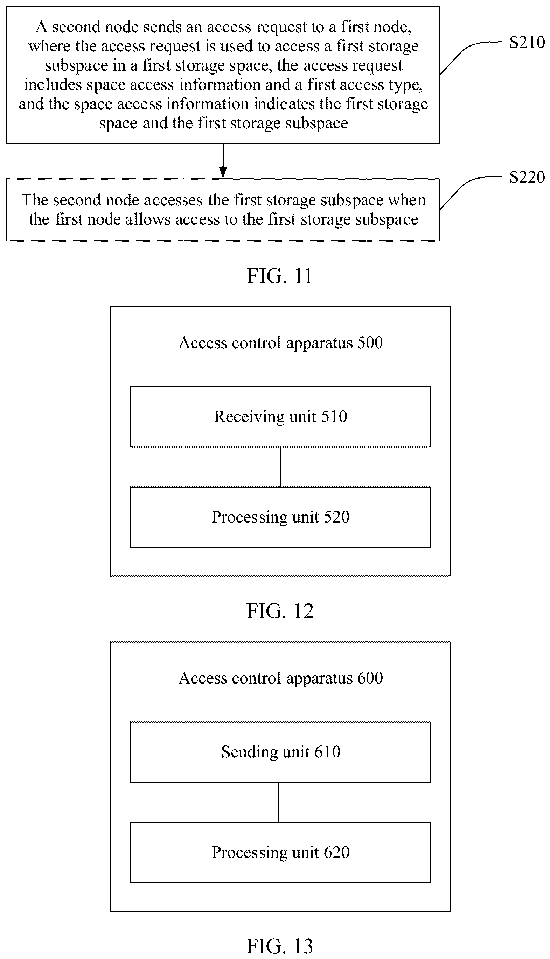

An embodiment of this application further provides another access control method. FIG. 11 is a schematic flowchart of another access control method according to an embodiment of this application. The method may include the following steps.

S210: A second node sends an access request to a first node, where the access request is used to access a first storage subspace in a first storage space, the first storage space is a storage space in the first node, the first storage space includes a plurality of storage subspaces, the first storage subspace is one of the plurality of storage subspaces, the access request includes space access information and a first access type, and the space access information indicates the first storage space and the first storage subspace.

S220: The second node accesses the first storage subspace when the first node allows access to the first storage subspace.

For content such as the first storage space, the first storage subspace, the space access information, and the first access type, refer to the related content in the foregoing embodiments. Details are not described again in this embodiment of this application.

In the access control method provided in embodiments of this application, on one hand, because a granularity of the first storage subspace is smaller than a granularity of the first storage space, access of the second node to the storage space at a smaller granularity can be controlled based on the method. On the other hand, the first node may adjust, in a user mode, access types corresponding to the plurality of storage subspaces, and the operation is simpler. Therefore, access control can be more flexible.

In a possible embodiment, each of the plurality of storage subspaces corresponds to one or more access types, and S220 may include: When the first storage space and the first storage subspace that are indicated by the space access information are valid, and the first access type belongs to one or more access types corresponding to the first storage subspace, the second node accesses the first storage subspace. For content in which the space access information is valid, refer to the foregoing embodiments. Details are not described again in this embodiment of this application.

In the access control method provided in embodiments of this application, when the space access information is valid and the first access type belongs to the access type corresponding to the first storage subspace, the second node accesses the first storage subspace. In this way, a basis is provided for the first node to control access of the second node to the first storage subspace, so that access control can be more flexible.

In a possible embodiment, at least two of the plurality of storage subspaces in the first storage space correspond to different access types. For content related to the access type, refer to the foregoing embodiments. Details are not described again in this embodiment of this application. In the access control method provided in embodiments of this application, at least two storage subspaces correspond to different access types, so that different access types can be set for different storage subspaces at small granularities. Therefore, access control can be more flexible.

In a possible embodiment, before S210, the method may further include: The second node sends a registration request to the first node. The registration request is used to request to register a storage subspace in the first node, the registration request includes a second access type, and the second access type includes the first access type. The second node receives a registration response from the first node. The registration response indicates the first storage space and the first storage subspace. For content such as the registration request, the second access type, and the registration response, refer to the foregoing embodiments. Details are not described again in this embodiment of this application.

In the access control method provided in embodiments of this application, the second node may register the first storage subspace in the first node, to provide a basis for the first node to control access of the second node to the first storage subspace. Therefore, access control can be more flexible.

In a possible embodiment, each of the plurality of storage subspaces corresponds to one access credential, the access request further includes a first access credential, and the method further includes: When the first access credential is consistent with an access credential corresponding to the first storage subspace, the second node accesses the first storage subspace. For content such as the first access credential and the access credential corresponding to the first storage subspace, refer to the foregoing embodiments. Details are not described again in this embodiment of this application.

In the access control method provided in embodiments of this application, the first node may further control access of the second node to the first storage subspace based on the first access credential, to provide a basis for the first node to control access of the second node to the first storage subspace. Therefore, access control can be more flexible.

In a possible embodiment, the method further includes: The second node receives the first access credential from the first node. The first access credential is obtained based on at least one of the following: the first storage space, the first storage subspace, an access type corresponding to the first storage subspace, and a random number. The first access credential is a message authentication code or a key. For content such as a generation manner and a form of the first access credential, refer to the foregoing embodiments. Details are not described again in this embodiment of this application.

In the access control method provided in embodiments of this application, the first access credential is generated based on at least one of the first storage space, the access type corresponding to the first storage space, the first storage subspace, the access type corresponding to the first storage subspace, and the random number. The first access credential may be a message authentication code or a key. This provides a basis for the first node to control access of the second node to the first storage subspace, so that access control can be more flexible.

In a possible embodiment, the method further includes: The second node receives a second access credential from the first node. The second node updates the first access credential to the second access credential. For content such as the second access credential, refer to the foregoing embodiments. Details are not described again in this embodiment of this application.

In the access control method provided in embodiments of this application, when terminating access permission of at least one second node, the first node updates the access credential, and sends the updated access credential to a second node maintaining access permission. Therefore, in a scenario in which a plurality of users simultaneously access the first storage subspace, when access permission of a part of users is terminated, continuous access to the first storage subspace by other users can be ensured. Therefore, access control can be more flexible.

The foregoing mainly describes the access control method. The following describes an access control apparatus corresponding to the access control method. In embodiments of this application, the access control apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

When each functional module is obtained through division based on each corresponding function, FIG. 12 is a diagram of a possible structure of an access control apparatus in the foregoing embodiments. The access control apparatus 500 may be used as a first node, a first storage space in the access control apparatus 500 includes a plurality of storage subspaces, and the apparatus includes a receiving unit 510 and a processing unit 520. The receiving unit 510 may be configured to support the apparatus in performing S110 in the method embodiments. The processing unit 520 may be configured to support the apparatus in performing S120 in the method embodiments.

For example, each of the plurality of storage subspaces corresponds to one or more access types, and the processing unit 520 is specifically configured to: when the first storage space and a first storage subspace that are indicated by space access information are valid, and a first access type belongs to one or more access types corresponding to the first storage subspace, allow access of a second node to the first storage subspace; and when the first storage space and the first storage subspace that are indicated by the space access information are invalid, or the first access type does not belong to the one or more access types corresponding to the first storage subspace, reject access of the second node to the first storage subspace.

For example, the apparatus includes a first permission registration unit, and the first permission registration unit may include the receiving unit and a sending unit. The receiving unit is configured to receive a registration request from the second node. The registration request is used to request to register a storage subspace, the registration request includes a second access type, and the second access type includes the first access type. The sending unit is further configured to send a registration response to the second node. The registration response indicates the first storage space and the first storage subspace.

For example, each of the plurality of storage subspaces corresponds to one access credential, the access request further includes a first access credential, and the processing unit 520 is further specifically configured to: when the first access credential matches an access credential corresponding to the first storage subspace, allow access of the second node to the first storage subspace; and when the first access credential does not match the access credential corresponding to the first storage subspace, reject access of the second node to the first storage subspace.

For example, the processing unit is further configured to generate the first access credential for the first storage subspace based on at least one of the following: the first storage space, an access type corresponding to the first storage space, the first storage subspace, the access type corresponding to the first storage subspace, and a random number. The sending unit is further configured to send the first access credential to the second node. The first access credential is a message authentication code or a key.

For example, a plurality of second nodes register the first storage subspace, and the processing unit is further configured to: when access permission of at least one of the plurality of second nodes to the first storage subspace is terminated, update the first access credential to a second access credential. The sending unit is further configured to send the second access credential to a second node in the plurality of second nodes other than the at least one second node. For example, at least two of the plurality of storage subspaces in the first storage space correspond to different access types.

It may be understood that components of the access control apparatus 500 may be separately configured to implement corresponding steps in the foregoing method embodiments. Because the steps have been described in detail in the foregoing access control method embodiments, details are not described herein again.

FIG. 13 is a diagram of another possible structure of an access control apparatus in the foregoing embodiments. The access control apparatus 600 may be used as a second node, and the access control apparatus 600 includes a sending unit 610 and a processing unit 620. The sending unit 610 may be configured to support the apparatus in performing S210 in the method embodiments. The processing unit 620 may be configured to support the apparatus in performing S220 in the method embodiments.

For example, each of a plurality of storage subspaces corresponds to one or more access types, and the processing unit 620 is specifically configured to: when a first storage space and a first storage subspace that are indicated by space access information are valid, and a first access type belongs to one or more access types corresponding to the first storage subspace, access the first storage subspace.

For example, the apparatus further includes a second permission registration unit, and the second permission registration unit may include the sending unit and a receiving unit. The sending unit is configured to send a registration request to a first node. The registration request is used to request to register a storage subspace in the first node, the registration request includes a second access type, and the second access type includes the first access type. The receiving unit is further configured to receive a registration response from the first node. The registration response indicates the first storage space and the first storage subspace.

For example, each of the plurality of storage subspaces corresponds to one access credential, the access request further includes a first access credential, and the processing unit 620 is further specifically configured to: when the first access credential is consistent with an access credential corresponding to the first storage subspace, access the first storage subspace.

For example, the receiving unit is further configured to receive the first access credential from the first node. The first access credential is obtained based on at least one of the following: the first storage space, the first storage subspace, an access type corresponding to the first storage subspace, and a random number. The first access credential is a message authentication code or a key.

For example, the receiving unit is further configured to receive a second access credential from the first node. The processing unit is further configured to update the first access credential to the second access credential. For example, at least two of the plurality of storage subspaces in the first storage space correspond to different access types.

It may be understood that components of the access control apparatus 600 may be separately configured to implement corresponding steps in the foregoing method embodiments. Because the steps have been described in detail in the foregoing access control method embodiments, details are not described herein again.

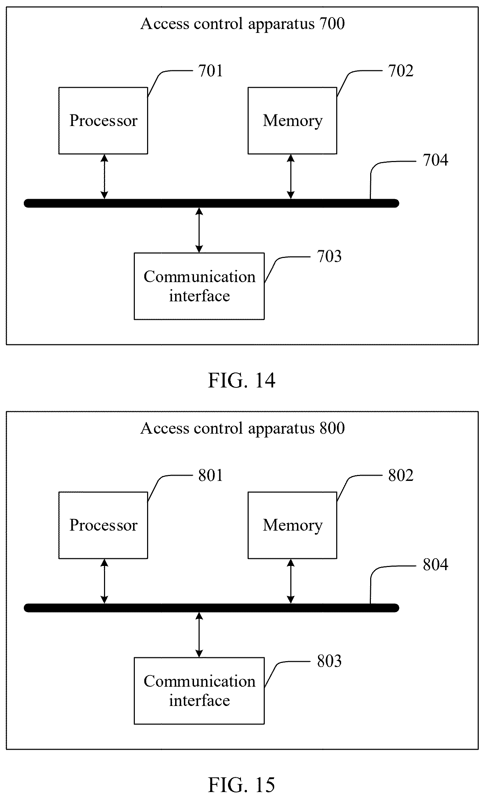

The foregoing describes the access control apparatus in embodiments of this application from a perspective of a modular functional entity. The following describes the access control apparatus in embodiments of this application from a perspective of hardware processing. An embodiment of this application further provides an access control apparatus. A structure of the access control apparatus may be shown in FIG. 14. The access control apparatus 700 may be used as a first node. The apparatus includes a processor 701, and may further include a memory 702, a communication interface 703, and a bus 704. The processor 701, the memory 702, and the communication interface 703 are connected through the bus 704.

The processor 701 is configured to control and manage an action of the apparatus, and the processor 701 is configured to perform one or more steps in the foregoing method embodiments, or another technical process described in this specification. The communication interface 703 is configured to support the apparatus in communicating, for example, support the apparatus in communicating with a second node. In this embodiment of this application, the processor 701 may be a central processing unit, a general-purpose processor, a digital signal processor, an application-specific integrated circuit, a field programmable gate array or another programmable logic device, a transistor logical device, a hardware component, or any combination thereof. The processor may implement or execute various example logical blocks, modules, and circuits described with reference to content disclosed in embodiments of this application. Alternatively, the processor may be a combination of processors implementing a computing function, for example, a combination of one or more microprocessors, or a combination of a digital signal processor and a microprocessor. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used to represent the bus in the foregoing figure, but this does not mean that there is only one bus or only one type of bus.

It may be understood that components of the access control apparatus 700 may be separately configured to implement corresponding steps in the foregoing method embodiments. Because the steps have been described in detail in the foregoing access control method embodiments, details are not described herein again.

An embodiment of this application further provides an access control apparatus. A structure of the access control apparatus may be shown in FIG. 15. The access control apparatus may be used as a second node. The apparatus includes a processor 801, and may further include a memory 802, a communication interface 803, and a bus 804. The processor 801, the memory 802, and the communication interface 803 are connected through the bus 804.

The processor 801 is configured to control and manage an action of the apparatus. In a possible embodiment, the processor 801 may be configured to support the apparatus in performing one or more steps in the foregoing method embodiments and another technical process described in this specification. The communication interface 803 is configured to support the apparatus in communicating, for example, support the apparatus in communicating with a first node. In this embodiment of this application, the processor 801 may be a central processing unit, a general-purpose processor, a digital signal processor, an application-specific integrated circuit, a field programmable gate array or another programmable logic device, a transistor logical device, a hardware component, or any combination thereof. The processor may implement or execute various example logical blocks, modules, and circuits described with reference to content disclosed in embodiments of this application. Alternatively, the processor may be a combination of processors implementing a computing function, for example, a combination of one or more microprocessors, or a combination of a digital signal processor and a microprocessor.

The bus 804 may be a peripheral component interconnect PCI bus, an extended industry standard architecture EISA bus, or the like. The bus may be classified into an address bus, a data bus, a control bus, or the like. For ease of representation, only one thick line is used to represent the bus in the foregoing figure, but this does not mean that there is only one bus or only one type of bus.

It may be understood that components of the access control apparatus 800 may be separately configured to implement corresponding steps in the foregoing method embodiments. Because the steps have been described in detail in the foregoing access control method embodiments, details are not described herein again.

According to another aspect, an embodiment of this application provides an access control system. The access control system includes a first node and a second node. The first node may be the first node provided in the foregoing apparatus embodiments, and is configured to perform steps of the first node in the method embodiments. The second node may be the second node provided in the foregoing apparatus embodiments, and is configured to perform steps of the second node in the method embodiments. Because the steps have been described in detail in the foregoing access control method embodiments, details are not described herein again.

According to still another aspect, an embodiment of this application provides a computer-readable storage medium. The computer-readable storage medium stores a computer program or instructions, and when the computer program or the instructions is/are run, steps of the first node in the foregoing method embodiments are implemented.

According to still another aspect, an embodiment of this application provides a computer-readable storage medium. The computer-readable storage medium stores a computer program or instructions, and when the computer program or the instructions is/are run, steps of the second node in the foregoing method embodiments are implemented.

According to yet another aspect, an embodiment of this application provides a computer program product. The computer program product includes a computer program (which may also be referred to as code or instructions), and when the computer program is run, a computer is caused to perform steps of the first node in the foregoing method embodiments.

According to yet another aspect, an embodiment of this application provides a computer program product. The computer program product includes a computer program (which may also be referred to as code or instructions), and when the computer program is run, a computer is caused to perform steps of the second node in the foregoing method embodiments.

The foregoing descriptions about implementations allow a person skilled in the art to clearly understand that, for the purpose of convenient and brief description, division into the foregoing functional modules is used as an example for illustration. During actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the part essentially contributing to the technical solutions in embodiments of this application or all or some of the technical solutions may be implemented in a form of a software product. The software product is stored in a storage medium and includes several instructions for instructing a device (which may be a single-chip microcomputer, a chip or the like) or a processor to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An access control method, applied to a first node comprising a first storage space, wherein the first storage space comprises a plurality of storage subspaces, and the method comprises:
receiving, by the first node, an access request from a second node, wherein the access request is used to access a first storage subspace in the first storage space, the first storage subspace is one of the plurality of storage subspaces, the access request comprises space access information and a first access type, and the space access information indicates the first storage space and the first storage subspace; and
controlling, by the first node, access of the second node to the first storage subspace based on the space access information and the first access type.

2. The method according to claim 1, wherein each of the plurality of storage subspaces corresponds to one or more access types, and controlling, by the first node, access of the second node to the first storage subspace based on the space access information and the first access type comprises:
when the first storage space and the first storage subspace that are indicated by the space access information are valid, and the first access type belongs to one or more access types corresponding to the first storage subspace, allowing, by the first node, access of the second node to the first storage subspace; or
when the first storage space and the first storage subspace that are indicated by the space access information are invalid, or the first access type does not belong to the one or more access types corresponding to the first storage subspace, rejecting, by the first node, access of the second node to the first storage subspace.

3. The method according to claim 1 or 2, wherein before receiving, by the first node, the access request from the second node, the method further comprises:
receiving, by the first node, a registration request from the second node, wherein the registration request is used to request to register a storage subspace in the first node, the registration request comprises a second access type, and the second access type comprises the first access type; and
sending, by the first node, a registration response to the second node, wherein the registration response indicates the first storage space and the first storage subspace.

4. The method according to any one of claims 1 to 3, wherein each of the plurality of storage subspaces corresponds to one access credential, the access request further comprises a first access credential, and the method further comprises:
when the first access credential matches an access credential corresponding to the first storage subspace, allowing, by the first node, access of the second node to the first storage subspace; or
when the first access credential does not match the access credential corresponding to the first storage subspace, rejecting, by the first node, access of the second node to the first storage subspace.

5. The method according to claim 4, wherein before receiving, by the first node, the access request from the second node, the method further comprises:
generating, by the first node, the first access credential for the first storage subspace based on at least one of the following: the first storage space, an access type corresponding to the first storage space, the first storage subspace, the access type corresponding to the first storage subspace, and a random number, and sending the first access credential to the second node, wherein
the first access credential is a message authentication code or a key.

6. The method according to claim 5, wherein a plurality of second nodes register the first storage subspace, and the method further comprises:
when access permission of at least one of the plurality of second nodes to the first storage subspace is terminated, updating, by the first node, the first access credential to a second access credential; and
sending, by the first node, the second access credential to a second node in the plurality of second nodes other than the at least one second node.

7. The method according to any one of claims 1 to 6, wherein at least two of the plurality of storage subspaces in the first storage space correspond to different access types.

8. An access control method, wherein the method comprises:
sending, by a second node, an access request to a first node, wherein the access request is used to access a first storage subspace in a first storage space, the first storage space is a storage space in the first node, the first storage space comprises a plurality of storage subspaces, the first storage subspace is one of the plurality of storage subspaces, the access request comprises space access information and a first access type, and the space access information indicates the first storage space and the first storage subspace; and
accessing, by the second node, the first storage subspace when the first node allows access to the first storage subspace.

9. The method according to claim 8, wherein each of the plurality of storage subspaces corresponds to one or more access types, and accessing, by the second node, the first storage subspace when the first node allows access to the first storage subspace comprises:
when the first storage space and the first storage subspace that are indicated by the space access information are valid, and the first access type belongs to one or more access types corresponding to the first storage subspace, accessing, by the second node, the first storage subspace.

10. The method according to claim 8 or 9, wherein before sending, by the second node, the access request to the first node, the method further comprises:
sending, by the second node, a registration request to the first node, wherein the registration request is used to request to register a storage subspace in the first node, the registration request comprises a second access type, and the second access type comprises the first access type; and
receiving, by the second node, a registration response from the first node, wherein the registration response indicates the first storage space and the first storage subspace.

11. The method according to any one of claims 8 to 10, wherein each of the plurality of storage subspaces corresponds to one access credential, the access request further comprises a first access credential, and the method further comprises:
when the first access credential is consistent with an access credential corresponding to the first storage subspace, accessing, by the second node, the first storage subspace.

12. The method according to claim 11, wherein the method further comprises:
receiving, by the second node, the first access credential from the first node, wherein the first access credential is obtained based on at least one of the following: the first storage space, the first storage subspace, the access type corresponding to the first storage subspace, and a random number, wherein
the first access credential is a message authentication code or a key.

13. The method according to claim 12, wherein the method further comprises:
receiving, by the second node, a second access credential from the first node; and
updating, by the second node, the first access credential to the second access credential.

14. The method according to any one of claims 8 to 13, wherein at least two of the plurality of storage subspaces in the first storage space correspond to different access types.

15. An access control apparatus, wherein a first storage space in the apparatus comprises a plurality of storage subspaces, and the apparatus comprises:
a receiving unit, configured to receive an access request from a second node, wherein the access request is used to access a first storage subspace in the first storage space, the first storage subspace is one of the plurality of storage subspaces, the access request comprises space access information and a first access type, and the space access information indicates the first storage space and the first storage subspace; and
a processing unit, configured to control access of the second node to the first storage subspace based on the space access information and the first access type.

16. The apparatus according to claim 15, wherein each of the plurality of storage subspaces corresponds to one or more access types, and the processing unit is specifically configured to:
when the first storage space and the first storage subspace that are indicated by the space access information are valid, and the first access type belongs to one or more access types corresponding to the first storage subspace, allow access of the second node to the first storage subspace; or
when the first storage space and the first storage subspace that are indicated by the space access information are invalid, or the first access type does not belong to the one or more access types corresponding to the first storage subspace, reject access of the second node to the first storage subspace.

17. The apparatus according to claim 15 or 16, wherein the apparatus further comprises a sending unit;
the receiving unit is further configured to receive a registration request from the second node, wherein the registration request is used to request to register a storage subspace, the registration request comprises a second access type, and the second access type comprises the first access type; and
the sending unit is configured to send a registration response to the second node, wherein the registration response indicates the first storage space and the first storage subspace.

18. The apparatus according to any one of claims 15 to 17, wherein each of the plurality of storage subspaces corresponds to one access credential, the access request further comprises a first access credential, and the processing unit is further specifically configured to:
when the first access credential matches an access credential corresponding to the first storage subspace, allow access of the second node to the first storage subspace; or
when the first access credential does not match the access credential corresponding to the first storage subspace, reject access of the second node to the first storage subspace.

19. The apparatus according to claim 18, wherein
the processing unit is further configured to generate the first access credential for the first storage subspace based on at least one of the following: the first storage space, an access type corresponding to the first storage space, the first storage subspace, the access type corresponding to the first storage subspace, and a random number;
the sending unit is further configured to send the first access credential to the second node; and
the first access credential is a message authentication code or a key.

20. The apparatus according to claim 19, wherein a plurality of second nodes register the first storage subspace;
the processing unit is further configured to: when access permission of at least one of the plurality of second nodes to the first storage subspace is terminated, update the first access credential to a second access credential; and
the sending unit is further configured to send the second access credential to a second node in the plurality of second nodes other than the at least one second node.

21. The apparatus according to any one of claims 15 to 20, wherein at least two of the plurality of storage subspaces in the first storage space correspond to different access types.

22. An access control apparatus, wherein the apparatus comprises:
a sending unit, configured to send an access request to a first node, wherein the access request is used to access a first storage subspace in a first storage space, the first storage space is a storage space in the first node, the first storage space comprises a plurality of storage subspaces, the first storage subspace is one of the plurality of storage subspaces, the access request comprises space access information and a first access type, and the space access information indicates the first storage space and the first storage subspace; and
a processing unit, configured to access the first storage subspace when the first node allows access to the first storage subspace.

23. The apparatus according to claim 22, wherein each of the plurality of storage subspaces corresponds to one or more access types, and the processing unit is specifically configured to:
when the first storage space and the first storage subspace that are indicated by the space access information are valid, and the first access type belongs to one or more access types corresponding to the first storage subspace, access the first storage subspace.

24. The apparatus according to claim 22 or 23, wherein the apparatus further comprises a receiving unit;
the sending unit is further configured to send a registration request to the first node, wherein the registration request is used to request to register a storage subspace in the first node, the registration request comprises a second access type, and the second access type comprises the first access type; and
the receiving unit is configured to receive a registration response from the first node, wherein the registration response indicates the first storage space and the first storage subspace.

25. The apparatus according to any one of claims 22 to 24, wherein each of the plurality of storage subspaces corresponds to one access credential, the access request further comprises a first access credential, and the processing unit is further specifically configured to:
when the first access credential is consistent with an access credential corresponding to the first storage subspace, access the first storage subspace.

26. The apparatus according to claim 25, wherein the receiving unit is further configured to:
receive the first access credential from the first node, wherein the first access credential is obtained based on at least one of the following: the first storage space, the first storage subspace, the access type corresponding to the first storage subspace, and a random number, wherein
the first access credential is a message authentication code or a key.

27. The apparatus according to claim 26, wherein
the receiving unit is further configured to receive a second access credential from the first node; and
the processing unit is further configured to update the first access credential to the second access credential.

28. The apparatus according to any one of claims 22 to 27, wherein at least two of the plurality of storage subspaces in the first storage space correspond to different access types.

29. An access control apparatus, wherein the apparatus comprises a processor and a memory, the memory stores instructions, and when the processor runs the instructions, the apparatus is caused to implement the access control method according to any one of claims 1 to 14.

30. A computer-readable storage medium, wherein the computer-readable storage medium stores a computer program or instructions, and when the computer program or the instructions is/are run, the access control method according to any one of claims 1 to 14 is implemented.
